(19) Europäisches Patentamt
European Patent Office
Office européen des brevets

(11) Publication number: **0 427 349 B1**

# (12) EUROPEAN PATENT SPECIFICATION

(45) Date of publication of patent specification: **12.07.95**

(51) Int. Cl.[6]: **C08B 33/08**, C08B 15/04, C08B 31/18, C08B 35/08, C11D 3/22

(21) Application number: **90202964.4**

(22) Date of filing: **08.11.90**

## (54) Method for the preparation of polydicarboxysaccharides.

(30) Priority: **10.11.89 NL 8902786**
**27.04.90 NL 9001027**

(43) Date of publication of application:
**15.05.91 Bulletin 91/20**

(45) Publication of the grant of the patent:
**12.07.95 Bulletin 95/28**

(84) Designated Contracting States:
**AT BE CH DE DK ES FR GB GR IT LI LU NL SE**

(56) References cited:

**DIE STÄRKE, vol. 16, no. 6, 1964, pages 177-180; W.H. DOANE et al.: "Oxidationof amylopectin with hypobromite at different hydrogen ion concentrations"**

**CHEMICAL ABSTRACTS, vol. 83, no. 10, 8th September 1975, page 162, abstract no.81760m, Columbus, Ohio, US; M. BORUCH: "Oxidation of potato starch byhypochlorite. I. Optimalization of conditions for starch oxidation",**

(73) Proprietor: **NEDERLANDSE ORGANISATIE VOOR TOEGEPAST-NATUURWETENSCHAPPELIJK ONDERZOEK TNO**
**Juliana van Stolberglaan 148**
**NL-2595 CL The Hague (NL)**

(72) Inventor: **Besemer, Arie Cornelis**
**Wethouder van der Vaartlaan 5**
**NL-2641 KJ Pijnacker (NL)**

(74) Representative: **de Bruijn, Leendert C. et al**
**Nederlandsch Octrooibureau**
**Scheveningseweg 82**
**P.O. Box 29720**
**NL-2502 LS Den Haag (NL)**

**EP 0 427 349 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

& ZESZ. NAUK. POLITECH. LODZ., CHEM. SPOZYW. 1975, 23, 43-

DIE STÄRKE, vol. 41, no. 9, September 1989, pages 348-354, Weinheim, DE; M.FLOOR et al.: "Preparation and calcium complexation of oxidizedpolysaccharides"

Starch/Stärke, vol. 37, no. 6, 1985, pages 192 - 200

Winnacker, Küchler, Chemische Technologie, vol.1, 4th ed., Carl Hanser Verlag, München 1984, page 323

## Description

The invention relates to a method for the preparation of polydicarboxysaccharides by oxidation of polysaccharides with a hypohalite.

From a technical standpoint, phosphates are the most suitable as calcium-binding agents ("builders") in detergents. However, because of the eutrophication of surface waters, the use of phosphates is increasingly less desirable. There is therefore a need for agents to replace phosphates. Such agents must, firstly, be able to bind calcium well and, in addition, be biodegradable, readily soluble in water, have no adverse influence on the action of the detergent and be non-toxic and also inexpensive. Many agents have already been investigated, but only a few, such as nitrilotriacetate, zeolites and polycarboxylates, meet the abovementioned requirements to an extent which renders them also usable in practice. However, doubts are still being expressed as to the safety of nitrilotriacetate. Zeolites, polycarboxylates and nitrilotriacetate are not degradable, or are degradable to an inadequate extent, and, moreover, zeolites have the disadvantage that they form usable "builders" only in combination with other agents.

Oxidised carbohydrates have also been proposed as substitutes for phosphates. Polydicarboxysaccharides in particular have suitable characteristics for this purpose. These compounds can be obtained by oxidation of carbohydrates, such as cellulose and starch and polysaccharides derived therefrom, with, for example, periodic acid, hydrogen peroxide or sodium hypochlorite. During this oxidation, the two vicinal hydroxyl functions in the cyclic hexose unit (for example glucose) of the polysaccharide are converted into two carboxyl functions, with ring opening. Methods of this type have been disclosed, for example, in Netherlands Patent Application 70.12380 and in M. Diamantoglou et al., Tenside Detergents 14, 250-256 (1977) and M.S. Nieuwenhuizen et al., Starch/Stärke 37, 192-200 (1985).

However the known methods for the oxidation of polysaccharides have a number of disadvantages. The use of periodic acid is fairly expensive because of the necessary regeneration of the periodic acid and is also laborious because the polysaccharide dialdehyde formed with periodic acid as an intermediate has to be further oxidised to the dicarboxylic acid using other agents, such as chlorite or hypochlorite. Hydrogen peroxide is also a relatively expensive oxidising agent and, moreover, makes the use of a catalyst, such as a tungsten compound, desirable for a sufficiently effective conversion. Furthermore, the reaction with hydrogen peroxide is not very specific, so that the 6-hydroxymethyl group is also oxidised to some extent, and depolymerisation (chain shortening) takes place.

Hypochlorite is a relatively inexpensive oxidising agent and leads to the desired dicarboxy product in one step. However, with the known methods the yield from the oxidation with hypochlorite is fairly low and incomplete oxidation and, additionally, depolymerisation occur. In the known conversions, an approximately three-fold excess of hypochlorite is used, which is a disadvantage economically and ecologically. Furthermore, the calcium-binding power of the product obtained is inadequate and the product has an unattractive yellow colour.

It is known (M. Floor et al., Starch 41, 348-354 (1989)) that the presence of low amounts of bromide ions in the hypochlorite oxidation of polysaccharides results in a substantial decrease of desired dicarboxy product.

A method has now been found for the oxidation of carbohydrates using hypohalite as oxidising agent, which method leads, with a lower consumption of oxidising agent, in a shorter reaction time to a higher yield of dicarboxy product, which product has a high calcium-binding and magnesium-binding power and a white colour.

The method according to the invention for the preparation of polydicarboxysaccharides by oxidation of polysaccharides in the presence of hypobromite and/or hypoiodite in a reaction medium, the hypobromite and/or hypoiodite being prepared in the reaction medium from bromide and/or iodide respectively, is characterized in that the hypobromite and/or hypoiodite are prepared electrochemically or by slowly adding chlorine or a hypochlorite solution dropwise and/or over a period of at least 2 hours and 15 min to the reaction mixture.

With the method according to the invention high yields of about 75-80% are obtained, while only 65-70% is achievable with the known hypochlorite oxidation. Furthermore, the reaction time is shortened. The amount of oxidising agent required is, moreover, appreciably lower than in the case of the known methods: according to the invention less than 1.2 times the theoretical amount is used, compared with about 1.5-3 times this amount according to the prior art.

The oxidation of polysaccharides according to the invention can be carried out using hypobromite or hypoiodite as such, which is preferably supplied in the form of salt, for example as sodium hypobromite or potassium hypoiodite, but may also in part be supplied in acid form. In the text which follows, for reasons of clarity, mention is made only of hypobromite, bromine, bromide etc., but the same also applies in principle

for hypoiodite, iodine, iodide etc.

Preferably, the hypobromite is prepared in the reaction medium, for example by oxidation of a suitable bromine compound or by disproportionation of bromine to bromide and hypobromite. Since, in principle, bromide is recycled on the oxidation of the polysaccharide by hypobromite, a smaller, for example catalytic, amount of bromide in the reaction mixture can then suffice.

A particularly advantageous manner of in situ preparation of hypobromite is oxidation of a bromide, for example sodium bromide, by electrochemical means, that is to say by withdrawal of electrons. This can be carried out, for example, by passing an electrical current for some time through a solution of the polysaccharide, bromide and, if appropriate, a base in an electrochemical cell which is known per se. By means of a suitable choice of electrical voltage and/or electrolyte concentration it can be ensured that the concentration of the oxidising agent remains low.

Furthermore, it has been found that hypobromite can be produced in a suitable concentration in the reaction medium by oxidation of bromide with chlorine-containing oxidising agents, such as chlorine, hypochlorite, chlorite, etc., in particular hypochlorite.

With this method, the concentration of oxidising agent is kept low, for example by adding the hypochlorite solution slowly dropwise to the reaction mixture or by passing chlorine gas slowly through the reaction mixture.

The use of bromide as catalyst in hypochlorite reactions is known per se, for example from J. Potze and P. Hiemstra, Die Stärke, 15, 217-225 (1963). However, in this publication only a partial oxidation of starch in order to increase the adhesiveness is described, and not the conversion to polydicarboxysaccharides. Furthermore, it is known that amylopectin can be oxidised with hypobromite with splitting of the $C_2$-$C_3$ bond of the glucose units (W.M. Doane and R.L. Whistler, Die Stärke, 16, 177-180, 1964). According to this publication, the oxidation proceeds more rapidly than that with hypochlorite, but a yield of dicarboxy product is not given; even with an amount of 3 moles of hypobromite per mol of glucose unit not all the glucose is oxidised. According to M. Floor et al., Starch/Stärke 41, 348-354 (1989), the presence of bromide ions has no accelerating action worthy of note on the oxidation of starch with sodium hypochlorite, and a catalytic amount of bromide lowers the yield of dicarboxy starch appreciably (from 86 to 47%). Processes for degrading starch using hypochlorite and bromide are also known from Dutch Patent 43493 and German Patent Application 1594891. It cannot be deduced from these publications that the oxidation of polysaccharides by the use of catalytic amounts of bromide at a low oxidising agent concentration would be accompanied by a higher yield and a lower hypochlorite consumption.

A catalytic amount of bromide is understood to be an amount of less than, for example, 20% of bromide in equivalents relative to the oxidation equivalents required for completely oxidising the polysaccharide to polydicarboxysaccharide. A larger amount is not harmful, but has no additional advantages worthy of note. Preferably, 0.5-10 equivalents of bromide are used for every 100 oxidation equivalents that are theoretically required.

The bromide used can in principle be any bromide-containing salt. For reasons of cost, sodium bromide is preferred. In the case of the oxidation with hypochlorite, the bromide can preferably be added to the polysaccharide but may optionally also be added to the hypochlorite.

In principle, three molecules of hypohalite per monosaccharide unit are required for the oxidation of $C_2$-$C_3$ hydroxy groups of polysaccharides, in accordance with the empirical equation (in which X represents halogen):

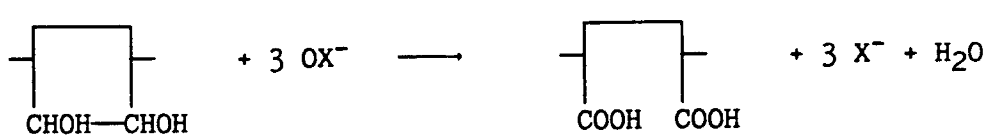


The oxidation can be carried out in a conventional manner, i.e. preferably at a temperature of between 10 and 25 °C, a pH of 7-11 and with slow addition of the oxidising agent, such as hypochlorite (usually dissolved in water), to the polysaccharide.

Alternatively, the temperature can be raised during the reaction in order to achieve a suitable reaction time and degree of conversion. It was found that the result of the oxidation reaction is improved when a reaction temperature of at least 35 °C, preferably at least 40 °c, is used for at least a part of the reaction time. The reaction can then be started at ambient temperature and can be increased after some time, for example after three hours. A temperature increase in the course of the reaction appears to have a

favourable effect on the calcium-binding properties of the product. An increased temperature, for example 35-40 °C, can also be maintained during the entire reaction, by using an appropriate rate of addition of the oxidising agent.

The reaction mixture is usually worked up by concentration and separation, for example by adding methanol and filtering off the precipitate formed. The salts can also be separated off by dialysis or ultrafiltration, after which the product is obtained by evaporation and, if necessary, purification. The reaction mixture can, however, also be concentrated in its entirety, followed by freeze-drying, spray-drying or a similar procedure. The product then still contains salts, such as, for example, sodium chloride or sodium bromide, but this does not have an adverse influence on the calcium-binding properties, so that a virtually equivalent calcium-binding agent can be obtained at lower production costs in this way.

A yellow coloration of the product can be avoided if the pH is kept between 7 and 11 and preferably between 7.5 and 9 during the reaction and below 9 during working up. In the case of oxidation with hypochlorite, this can be achieved by adding the hypochlorite slowly, for example in portions over several hours. By this means the rise in pH as a consequence of the addition of the (basic) hypochlorite solution wholly or partially compensates for the fall in pH which is the result of the oxidation reaction (hypochlorite is converted to less basic chloride and alcohol functions to more acid carboxyl groups). Too sharp a rise in the pH during working up is countered by adding acid, for example at a pH of 8.5-9. A lower pH, for example 4-5, can also be chosen during working up.

The term polydicarboxysaccharide or dicarboxypolysaccharide is here understood to denote a polysaccharide in which a large proportion of the $C_2$-$C_3$ diol functions have been converted, with ring opening, into two carboxyl groups in each case. Insofar as the polysaccharide consists of glucose units, 2-carboxy-1-hydroxymethylethyleneoxy-carboxymethyleneoxy units are thus formed. However, for the product to be able to be used as a calcium-binding agent it is not essential that all monosaccharide units have been converted in this way. Therefore, for the purposes of the invention, polysaccharides in which a small proportion of the monosaccharide units have not been converted or have been converted into a $C_2$-$C_3$-dialdehyde derivative and/or into a 6-carboxy derivative, or converted in some other way, also fall under the term polydicarboxysaccharide. The method according to the invention yields polydicarboxysaccharides which have a high content of approximately 75% or more of $C_2$-$C_3$-dicarboxymonosaccharide units. Incidentally, the term comprises both the acids themselves and the sodium salts and other salts thereof.

In principle, all sorts of polysaccharides can be converted into good calcium-binding and magnesium-binding polydicarboxysaccharides by the present method. Preferably, the polysaccharide is a polysaccharide containing anhydroglucose units (glucan). Examples are starch from any suitable source, such as, for example, wheat, maize, potatoes etc., and starch fractions, such as amylose and amylopectin, cellulose and cellulose fractions and derivatives and partial hydrolysis products of such carbohydrates, such as maltodextrins, amylosedextrins etc. It has been found that amylosedextrins, i.e. straight-chain dextrins which are obtained by enzymatic hydrolysis from the amylopectin fractions of starch and have a constant composition with a degree of polymerization (DP) of 15-50 glucose units, are very suitable as starting material for the method according to the invention. Maltodextrins also possess the desired properties after oxidation; the advantage of maltodextrins is that these are relatively inexpensive, as enzymatic conversion is not required.

According to an advantageous embodiment of the method according to the invention, a polysaccharide is used which has been oxidised to a slight extent before a partial hydrolysis. By means of such a pre-oxidation, the solubility of the polysaccharide in the medium, in particular in water, is increased, so that the partial hydrolysis and the oxidation with hypobromite can take place in more concentrated solution and more cleanly. A polysaccharide of this type oxidised to a slight extent is known per se, for example as "oxystarch". For this purpose, a solution or suspension of the polysaccharide, for example amylose, is oxidised with a small amount of oxidising agent, preferably 1-10 mol % of hypochlorite, if necessary at elevated temperature; the more readily soluble polysaccharide thus obtained is then hydrolysed until the average chain length has fallen to preferably 10-100, after which the polysaccharide is further oxidised in the presence of hypobromite, as explained above. Intermediate hydrolysis may not be necessary when the chain length has already decreased sufficiently during the pre-oxidation; this is especially the case when the pre-oxidation is carried out at increased temperature. A lower chain length will result in a better biodegradability, but also in a lower calcium complexing capacity. Thus by selecting the appropriate conditions during oxidation, a product having the desired properties can be obtained by using the method according to the invention.

The polydicarboxysaccharides obtained using the method according to the invention have outstanding calcium-binding and magnesium-binding properties, are readily biodegradable, can be prepared relatively inexpensively and in other respects also meet the requirements as calcium-sequestering agents ("builders") for detergents.

The calcium-binding power can be expressed as the complex constant K (see M.S. Nieuwenhuizen et al. Starch/Stärke 37, 192-200 (1985)). For the known polydicarboxysaccharides obtained by oxidation with periodate/chlorite, this constant is at best of the order of 10,000 (log K = 3.8-4.1), and for the known polydicarboxysaccharides obtained by hypochlorite oxidation it is at most about 1000 (log K = 3) in the case of maltodextrin and 6000 (log K = 3.8) in the case of amylose. The products from the present method have a log K of the order of 3.7-3.8, thus a factor 5 to 6 better than the known products obtained from maltodextrin and hypochlorite and virtually equally as good as the best, but more expensive, polydicarboxyamyloses.

Another parameter for expressing the calcium-binding power of polymeric materials, which is more reliable, is the intrinsic complex constant $K_{int}$, whereby $K = Z/\{[Ca](1-Z)\} = K_{int}e^{cZ}$. Z is the metal coordinated fraction of the polymer sites and c is a ploymer constant. Conversion gives $\log K_{int} = pCa + \log Z/(1-Z)-aZ$, wherein a = c.log e (see M. Floor, A.P.G. Kieboom and H. van Bekkum, Starch/Stärke 41, 348 (1989)). The known, partially oxidised polysaccharides have a log $K_{int}$ in the range of 5.5-6. The products of the present process have a log $K_{int}$ between 6 and 8.

The method of the invention can be used to produce calcium-binding agents ("builders") which contain the polydicarboxysaccharides obtained in the manner described above. To further improve the calcium-binding properties, these agents can also contain other known "co-builders", such as phosphates, nitrilotriacetate and corresponding compounds such as ethylenediamine tetraacetate and oxydiacetate, and zeolites. In particular, the combination with zeolites yields an outstanding builder for detergents. In a mixture of a polydicarboxysaccharide with a zeolite, a ratio of 10 : 1 to 1 : 2 can, for example, be used, depending on the intended use etc.

The invention also relates to a process of making a calcium-binding agent which comprises the preparation of a polydicarboxysaccharide according to the method described above and the addition of a zeolite to the product thus obtained.

The method of the invention can further be used to make detergents which contain the above-mentioned calcium-binding agents, or the polydicarboxysaccharides obtained in the manner described above, in effective amounts.

Example I

7.1 g of amylosedextrin (prepared by enzymatic hydrolysis of waxy maize) were dissolved in 150 ml of hot water. After cooling, 0.3 g of NaBr was added and the pH was adjusted to a value of about 9. At 5 minute intervals, 2 ml of an NaOCl solution which contained 0.10 g of active chlorine per ml were added. On each addition a yellow coloration appeared probably resulting from an intermediate oxidation product, which coloration disappeared again in the course of the 5 minutes. Furthermore, the pH rose immediately after the addition of the hypochlorite solution, followed by a fall as a consequence of the oxidation reaction. During the reaction the pH was maintained at a value of 7.5-9, firstly by addition of the hypochlorite solution and then by addition of alkali. At the end of the reaction (made discernible by the fact that the pH no longer fell and NaOCl remained present) 55 ml of NaOCl solution were found to have been consumed.

The solution was concentrated to 50 ml and then poured into 200 ml of methanol. The white precipitate was filtered off and dried under reduced pressure. The yield was 9.1 g (approximately 80% of theory). The NaOCl consumption was found to have been 112% of the theoretically required amount.

The $^{13}C$ NMR spectrum of the product agrees with the expected structure of the dicarboxyamylosedextrin and with the spectra of the substances obtained by Van Nieuwenhuizen et al. (Starch/Stärke 37, 192-200 (1985)).

The calcium-binding power was then determined using an electrode selective for calcium ions. 100-200 mg of the polydicarboxysaccharide were added to 100 ml of water with $[Ca^{2+}] = 1.42$ mM and the resulting $[Ca^{2+}]$ was measured. This gives a log K of 3.7.

Comparison example

The above example was repeated except that sodium bromide was not added. The fall in the pH as a consequence of the oxidation reaction took place more slowly by a factor of about 3. Starting from 3.8 g of amylosedextrin in 100 ml of water, 4.1 g of white product were obtained (73% of theory). The $^{13}C$ NMR spectrum of the substance agreed with that according to the above example. 172% of the theoretically required amount of hypochlorite were found to have been consumed. The calcium-binding power of the product corresponded to a log K of 3.6.

Example II

Preparation of dicarboxymaltodextrins

500 g of wheat starch (Excelsior F, solids content 87.7%) were dissolved in 5 litres of water (demineralised, approximately $10^{-6}$ M $Ca^{2+}$) at 160 ° C. After cooling to 100 ° C, 1 N hydrochloric acid was added to this solution, with stirring, until a final concentration of 0.01 N was reached. The starch was then hydrolysed for several hours at 100 ° C. The reaction time in this example was 3 hours.

The reaction was stopped by neutralising with 1 N NaOH (to pH 5-7). On the grounds of the reducing power and of the HPL chromatogram, the average chain length (DP) was estimated to be 85 glucose units.

After cooling to about 40 ° C, 3.3 g of NaBr were added to the hydrolysis product and the pH was adjusted to 9 with sodium hydroxide solution. The reaction vessel was protected against light using aluminium foil. Sodium hypochlorite solution (10% chlorine, checked titrimetrically with thiosulphate) was then added dropwise, with stirring. Initially, the rate of addition was about 0.5 ml per minute. The temperature of the reaction mixture was brought to about 25 ° C in the course of one hour and this temperature was maintained. After about 15 minutes, the pH started to fall. The pH was kept at 9 by dropwise addition of a 5 N sodium hydroxide solution from a pH-stat (PHM 82 radiometer). The rate of addition of the hypochlorite was gradually increased to about 10 ml per minute after 2 hours. After 6 hours a total amount of 3 litres of hypochlorite solution had been added. After stirring overnight, the small excess of hypochlorite still present was removed with sodium sulphite. The hypochlorite consumption was found to be 1.55 mol per mol equivalent of starch, or 52% of the theoretical amount. The solution was neutralised to pH 7 and evaporated to about 25% of the original volume. After freeze-drying, a virtually white product in powder form was obtained. This product contained about 45% (w/w) salt, mainly sodium chloride. In order to remove this salt, the material was dialysed against tap water. After dialysis, the products were freeze-dried, by which means a white, fine powder was obtained. Yield before dialysis about 95%; yield after dialysis 350 g = 55% relative to the starting starch.

Calcium-binding power

The calcium-binding power of the oxidised starch hydrolysis product was determined with the aid of an ion-selective electrode (F 2112Ca, radiometer). Solutions containing $10^{-3}$-$10^{-6}$ M $Ca^{2+}$, which also contained 0.003 M NaCl, were used for the calibration of this electrode. For the measurements, use was made of a calomel electrode (SCE, radiometer 401) as reference electrode. Below a concentration of $5.10^{-6}$ M the measurement with the ion-selective electrode is, according to the manufacturer's specification, not entirely reliable. Nevertheless, it remains possible to measure lower concentrations (down to about $10^{-8}$ M) by extrapolation. The error is estimated to be ± 50% in this case.

In the figure the calcium concentration is shown as a function of the ligand concentration of the desalinated product (o). The measurements on dicarboxy starch made by Diamantoglou (Tenside Detergents 14, 250 (1977)) are also included in the figure (■) for comparison.

Table A gives the calculated complex constants for $Ca^{2+}$ with the desalinated product. For calculation of K, complex formation in accordance with the equation: $-(COO^-)_4 + Ca^{2+} \rightarrow -(COO^-)_4 Ca^{2+}$ was assumed.

Table A

| Complex constants for $Ca^{2+}$ with dicarboxymaltodextrin according to this example as ligand (initial concentration $1.10^{-3}$ M). | | | |
|---|---|---|---|
| $Ca^{2+}$ | [M] | concentration (mM) of dicarboxymaltodextrins | K ($M^{-1}$) |
| 1 | $.10^{-3}$ | 0 | - |
| 2.5 | $.10^{-4}$ | 1.37 | 9,700 |
| 7 | $.10^{-5}$ | 3.31 | 11,000 |
| 3 | $.10^{-5}$ | 5.39 | 14,600 |
| 1 | $.10^{-5}$ | 7.49 | 30,000 |
| 5 | $.10^{-6}$ | 9.60 | 46,000 |
| 2.5 | $.10^{-6}$ | 11.70 | 74,000 |
| 1 | $.10^{-6}$ | 16.0 | 134,000 |

For comparison: the complex constants found by Van Nieuwenhuizen (Starch/Stärke 37, 192 (1985)) are 1000 $M^{-1}$ for dicarboxymaltodextrins prepared using NaOCl, 6000 $M^{-1}$ for dicarboxyamylose prepared using NaOCl and 5000-11,000 $M^{-1}$ for dicarboxy starch prepared using $HIO_4$ and $NaClO_2$.

As the complex constant is dependent on the ligand concentration, the complexation apparently proceeds in a manner other than that assumed by Van Nieuwenhuizen. However, it is also possible that the method of measurement is responsible for this (Van Nieuwenhuizen measures at 0.1 M KCl and it is therefore possible that $K^+$ influences the measurement or the complexation). If measured under conditions according to Van Nieuwenhuizen, K is clearly lower: 2500-4500 $M^{-1}$.

Table B gives the concentration of calcium ions in tap water, as measured by ourselves after successive addition of zeolite and dicarboxymaltodextrin. The original calcium concentration was $10^{-3}$ M.

Table B

| Calcium concentration (M) in tap water ($10^{-3}$ M) after successive addition of zeolite (1g/l) and desalinated dicarboxymaltodextrin (1 g/l). | | |
|---|---|---|
| | $Ca^{2+}$ (M) with zeolite | $Ca^{2+}$ (M) with dicarboxymaltodextrin and zeolite |
| Example II | $2.10^{-6}$ | $5.10^{-8}$ |
| Example III | $2.10^{-6}$ | $5.10^{-8}$ |
| Example IV | $2.10^{-6}$ | $2.10^{-7}$ |

It can be seen from the table that it is possible to lower the $Ca^{2+}$ concentration in tap water to below $10^{-6}$ M using desalinated dicarboxymaltodextrin in combination with zeolite.

Measurements on product which has not been desalinated indicate that the calcium-binding power is approximately the same as that of the desalinated product.

## Biodegradability

According to tests (M89/395-MT-TNO), the dicarboxymaltodextrin obtained is "inherently biodegradable" to "readily biodegradable" (OECD terminology).

## Example III

Example II was repeated, the only difference being a hydrolysis time of 3.5 instead of 3 hours. The average chain length was estimated to be 50 glucose units. The results were in accordance with those of Example II, as is seen, inter alia, from the value for the calcium concentration in Table B. Yield: 310 g.

Example IV

Example II was repeated, the only difference being a hydrolysis time of 4.5 instead of 3 hours. The average chain length of the product to be oxidised was estimated to be 25 glucose units. The calcium-binding power of the product was lower (Table B), but the other results were virtually identical. Yield: 300 g.

Example V

Electrochemical preparation of dicarboxyamylosedextrins

The preparation of dicarboxyamylosedextrins was carried out in an electrochemical cell provided with a Luggin capillary for measuring the reference voltage.

The electrodes used were:

- Pt wire for the anode with a surface area of 15 $cm^2$
- stainless steel for the cathode
- SCE (calomel) as reference electrode.

4.5 g of amylosedextrins (from waxy maize) were dissolved in 100 ml of water at 100 °C. After cooling to 40 °C, 4.0 g of $NaHCO_3$ and 1.0 g of NaBr were added to the solution. Current was passed through this solution for 24 hours. At an anode potential of 1.5 V vs SCE, the initial current strength was 250 mA. The temperature was brought to 20-25 °C in the course of one hour and this temperature was maintained during the reaction. The current strength gradually fell to 180 mA. The charge consumption was about 19,000 C (theoretically 16,000 C is required).

The product was isolated by, successively, evaporating the colourless solution to about 50 ml, pouring into methanol and, after one day, filtering off the precipitate formed. After washing with methanol, the product was dried under vacuum. The yield was 5.5 g (84%). Measurements of the calcium-binding power gave log K = 3.8.

Example VI

Washing tests

Washing powder compositions containing a dicarboxymaltodextrin according to Example II and zeolite in amounts corresponding to those in currently available detergents gave a calcium carbonate deposit of 0.2% on test pieces of fabric washed 12 times. Known washing powders score 0.7% and liquid detergents 0.1%.

With regarding to discoloration, the detergent having the composition according to the invention is somewhat poorer than the known good washing powders, but better than the known good liquid detergents.

Example VII

10.5 g of amylosedextrin was dissolved in 100 ml of water of 90 °C wherein 500 mg of NaBr was dissolved. After cooling to 22 °C, hypochlorite solution and 1 M NaOH were added in such a way as to maintain the pH between 9.0 and 9.5. After about 3 hours 50 ml of NaOCl solution and 40 ml of NaOH solution had been added. The reaction mixture was then gradually heated to 40 °C, causing the reaction to be accelerated. The reaction was virtually complete after 4 hours. 110 ml of hypochlorite solution (= 10 g of chlorine) and 90 ml of hydroxide solution had been used. The mixture was worked up with methanol. The isolated yield of dicarboxy product was 8 g. $K_{int}$ as according to Floor et al (Starch/Stärke 41, 348 (1989)) was 6.3.

The biodegradation of the fully oxidized product was investigated by subjecting the product as the only nutrient source to several fungi and bacteria isolated from a sewage treatment plant. It was found that all the examined organisms grow on this nutrient medium, both at high temperature (about 20 °C) and at low temperature (about 5 °C). Typically, growth starts earlier with fungi than with bacteria.

Example VIII

10 g of air-dried (= 9.0 g dry) wheat starch in 100 ml of water was oxidized in the manner of example VII. 100 ml of hypochlorite solution (= 9 g of chlorine) had been used after completion of the reaction. The yield was 8 g having a $K_{int}$ of 6.7. The product was biodegradable according to the test of example VII.

Example IX

18.6 g of starch (= 16.2 g or 100 mmol glucose equivalent) was suspended in a mixture of 30 g ice, 30 g water and 1.0 g of NaBr. 25 ml of NaOCl solution (2.4 g $Cl_2$) was added to the reaction mixture which was cooled by an ice/water bath. The pH was adjusted to 9.5 and this value was maintained by adding 4M NaOH solution (which was necessary within a few minutes).

The reaction rate decreased significantly after several hours, which was observed by the decrease rate of NaOH addition. Then, 25 ml of NaOCl solution was added, whereupon an increase of the reaction rate was observed in spite of the increased dilution. The addition was repeated 5 times within 6 hours, thus totalling the addition of NaOCl to 205 mmol. It appeared that all suspended starch had disappeared after 4 hours. The cooling was removed and the temperature of the reaction mixture (4-6 °C) started increasing to about 22 °C. After overnight stirring at roomtemperature, a total amount of 150 mmol of NaOH (about 75% of the theoretical amount) had been added, and the reaction appeared to be complete as judged by the rate of NaOH addition. However, the reaction proceeded further by increasing the temperature to 45 °C until a total of 200 mmol of NaOH had been added. The pH remained constant after that. The reaction mixture was worked up as usual. The product yield was 22.5 g (95%). The calcium binding power was 1.6 mmol Ca/g.

Note:

The calcium binding power of the product of different batches run according to this example, with the temperature as a variable is:

a: 0-5 °C: 1.2-1.6 mmol Ca/g

b: 20-25 °C: 0.8-1.2 mmol Ca/g

The pH of the reaction mixture has a small effect: pH 9.5 and pH 10 give comparable results. At pH = 9, the calcium binding power is lower by 10-20%.

Thus, the temperature at which the reaction is started, is of the greatest influence. An adverse effect is found when the reaction temperature is too high in the initial phase (> 35 °C).

In a larger scale experiment according to this example, 150 g of wheat starch gave a yield of 95% of a product which has a sequestering capacity (SC) of 1.4 mmol Ca/g.

A similar experiment with 120 g of starch gave a product having an SC of 1.6 mmol Ca/g.

Known processes normally result in a product having an SC of about 0.8-1.2 (M. Floor et al., Starch/Stärke 41, 348-354 (1989)).

**Claims**

1. Method for the preparation of polydicarboxysaccharides by oxidation of polysaccharides in the presence of hypobromite and/or hypoiodite in a reaction medium, the hypobromite and/or hypoiodite being prepared in the reaction medium from bromide and/or iodide respectively, characterised in that the hypobromite and/or hypoiodite are prepared electrochemically or by adding chlorine or a hypochlorite solution dropwise and/or over a period of at least 2 hours and 15 min to the reaction mixture.

2. Method according to Claim 1, characterised in that 1.5-30 moles of bromide are used per 100 hexose units.

3. Method according to Claim 1 or 2, characterised in that a pH of 9-10 is used.

4. Method according to one of Claims 1-3, characterised in that a temperature of at least 35 °C is maintained during at least a part of the oxidation reaction.

5. Method according to one of Claims 1-4, characterised in that the polysaccharide used is a partially hydrolysed polysaccharide such as amylosedextrin or maltodextrin.

6. Method for the preparation of polydicarboxysaccharides by oxidation of polysaccharides in the presence of a hypohalite as oxidising agent, characterised in that the polysaccharides are partially oxidised to the extent of 1-10% with respect to oxidation to polydicarboxysaccharides, the partially oxidised polysaccharides are then partially hydrolysed to yield an average chain length of 10-100 hexose units per mol of polysaccharide, and the partially hydrolysed polysaccharides are then oxidised by the method of one of Claims 1-5.

7. A process for making a calcium-binding agent which comprises the preparation of a polydicarboxysaccharide according to one of Claims 1-6 and the addition of a zeolite to the product so obtained.

**Patentansprüche**

1. Verfahren zur Herstellung von Polydicarboxysacchariden durch Oxidation von Polysacchariden in Gegenwart von Hypobromit und/oder Hypoiodit in einem Reaktionsmedium, wobei das Hypobromit und/oder das Hypoiodit in dem Reaktionsmedium aus Bromid und/oder Iodid hergestellt werden, dadurch **gekennzeichnet**, daß das Hypobromit und/oder Hypoiodit elektrochemisch oder durch Zugeben von Chlor oder einer Hypochloritlösung, und zwar tropfenweise und/oder im Verlauf von mindestens 2 h und 15 min, zur Reaktionsmischung hergestellt werden.

2. Verfahren nach Anspruch 1, dadurch **gekennzeichnet**, daß 1,5 bis 30 mol Bromid pro 100 Hexose-Einheiten eingesetzt werden.

3. Verfahren nach Anspruch 1 oder 2, dadurch **gekennzeichnet**, daß man bei einem pH-Wert von 9 bis 10 arbeitet.

4. Verfahren nach einem der Ansprüche 1 bis 3, dadurch **gekennzeichnet**, daß man die Temperatur bei mindestens 35 °C während mindestens eines Teils der Oxidationsreaktion hält.

5. Verfahren nach einem der Ansprüche 1 bis 4, dadurch **gekennzeichnet**, daß man als Polysaccharid ein teilweise hydrolysiertes Polysaccharid verwendet, wie Amylosedextrin oder Maltodextrin.

6. Verfahren zur Herstellung von Polydicarboxysacchariden durch Oxidation von Polysacchariden in Gegenwart eines Hypohalogenits (Hypohalit) als Oxidationsmittel, dadurch **gekennzeichnet**, daß man die Polysaccharide partiell bis zu einem Ausmaß von 1 bis 10 % in Bezug auf die Oxidation zu Polydicarboxysacchariden oxidiert, die partiell oxidierten Polysaccharide danach partiell hydrolysiert und eine mittlere Kettenlänge von 10 bis 100 Hexose-Einheiten pro mol Polysaccharid erhält und die partiell hydrolysierten Polysaccharide danach durch das Verfahren gemäß einem der Ansprüche 1 bis 5 oxidiert.

7. Verfahren zur Herstellung eines Kalzium-Bindemittels, **gekennzeichnet** durch die Herstellung eines Polydicarboxysaccharids gemäß einem der Ansprüche 1 bis 6 und die Zugabe eines Zeoliths zu dem auf diese Weise erhaltenen Produkt.

**Revendications**

1. Procédé pour la préparation de polydicarboxysaccharides par oxydation de polysaccharides en présence d'hypobromite et/ou d'hypoiodite dans le milieu réactionnel, l'hypobromite et/ou l'hypoiodite étant préparés dans le milieu réactionnel à partir du bromure et/ou de l'iodure respectif, caractérisé en ce que l'hypobromite et/ou l'hypoiodite sont préparés électrochimiquement ou en ajoutant au milieu réactionnel du chlore ou une solution d'hypochlorite goutte à goutte et/ou sur une durée d'au moins 2 heures et 15 min.

2. Procédé selon la revendication 1, caractérisé en ce que 1,5 à 30 moles de bromure sont utilisés pour 100 motifs d'hexose.

3. Procédé selon la revendication 1 ou 2, caractérisé en qu'un pH de 9 à 10 est utilisé.

4. Procédé selon l'une quelconque des revendications 1 à 3, caractérisé en ce qu'une température d'au moins 35 °C est maintenue pendant au moins une partie de la réaction d'oxydation.

5. Procédé selon l'une quelconque des revendications 1 à 4, caractérisé en ce que le polysaccharide utilisé est un polysaccharide partiellement hydrolysé tel que l'amylosedextrine ou la maltodextrine.

6. Procédé pour la préparation de polydicarboxysaccharides par oxydation de polysaccharides en présence d'un hypohalogénite en tant qu'agent d'oxydation, caractérisé en ce que les polysaccharides sont

partiellement oxydés à raison de 1 à 10% en ce qui concerne l'oxydation aux polydicarboxysaccharides, les polysaccharides partiellement oxydés sont ensuite partiellement hydrolysées pour produire une longueur de chaîne moyenne de 10 à 100 motifs d'hexose par mole de polysaccharide, et les polysaccharides partiellement hydrolysés sont ensuite oxydés à l'aide du procédé selon l'une quelconque des revendications 1 à 5.

7. Procédé pour produire un agent liant le calcium qui comprend la préparation d'un polydicarboxysaccharide selon l'une quelconque des revendications 1 à 6 et l'addition d'une zéolite au produit ainsi obtenu.

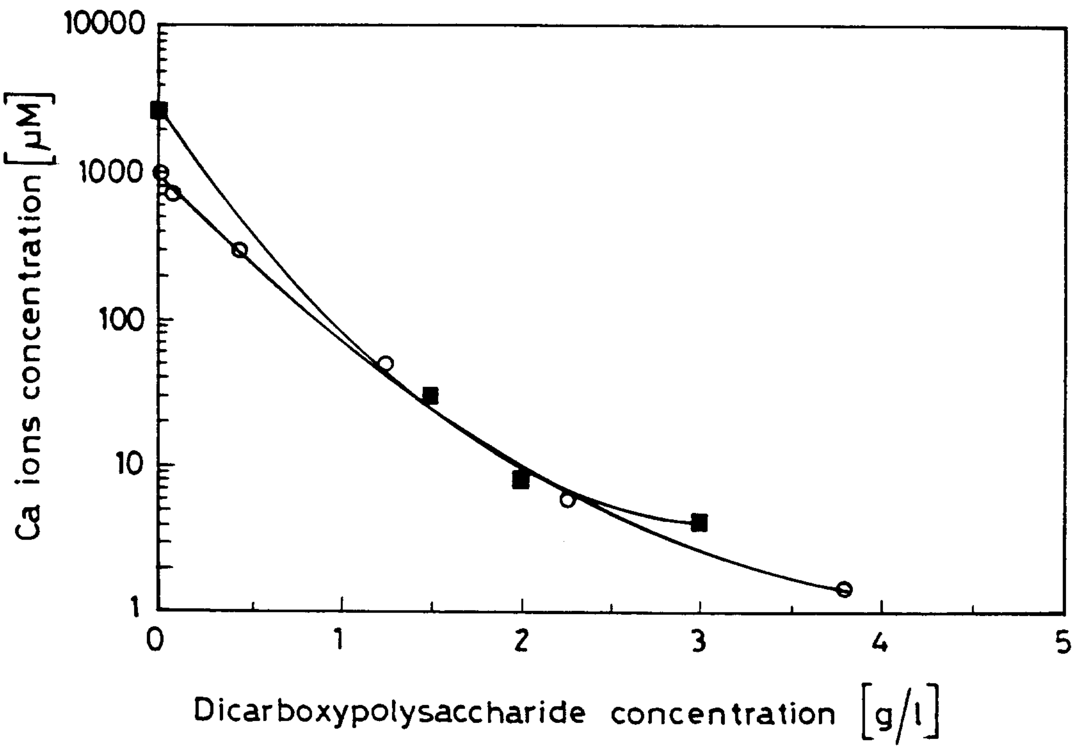
10000
1000
100
10
1
Ca ions concentration [µM]
0
1
2
3
4
5
Dicarboxypolysaccharide concentration [g/l]